# EUROPÄISCHE PATENTSCHRIFT

(11) **EP 2 280 897 B1**
(45) Veröffentlichungstag und Bekanntmachung des Hinweises auf die Patenterteilung: **26.09.2012**
(21) Anmeldenummer: 09737858.2
(22) Anmeldetag: 27.04.2009
(51) Int. Cl.: B63B 27/10, B66C 13/02, B66C 23/08, B66F 11/04, B25J 11/00

(54) **VORRICHTUNG ZUM SICHEREN ÜBERSETZEN VON PERSONAL ODER MATERIAL VON EINEM ALS SCHIFF AUSGEBILDETEN OBJEKT AUF EIN RELATIV DAZU BEWEGTES OBJEKT UND SCHIFF MIT DER VORRICHTUNG**
DEVICE FOR THE SAFE TRANSFER OF PERSONNEL OR MATERIAL FROM AN OBJECT CONFIGURED AS A BOAT TO AN OBJECT MOVING RELATIVE THERETO, AND BOAT COMPRISING THE DEVICE
DISPOSITIF POUR LE TRANSFERT SÛR DE PERSONNEL OU DE MATÉRIEL, DEPUIS UN OBJET RÉALISÉ SOUS LA FORME D UN BATEAU VERS UN OBJET DÉPLACÉ PAR RAPPORT À CELUI-CI, ET BATEAU ÉQUIPÉ DU DISPOSITIF

(30) Priorität: 28.04.2008 DE 102008021216; 03.04.2009 DE 102009016082
(43) Veröffentlichungstag der Anmeldung: 09.02.2011
(73) Patentinhaber: Leske, Stefan, 47495 Rheinberg (DE)
(72) Erfinder: Leske, Stefan, 47495 Rheinberg (DE)
(74) Vertreter: Frese, Beate
(86) Internationale Anmeldenummer: PCT/EP2009/003049
(87) Internationale Veröffentlichungsnummer: WO 2009/132814

(56) Entgegenhaltungen:
- WO-A-01/95989
- WO-A-02/20343
- WO-A-2005/030571
- WO-A-2007/120039
- GB-A- 2 336 828
- US-H1- H2 163

## Beschreibung

Die Erfindung betrifft eine Vorrichtung zum sicheren Übersetzen von Personal oder Material von einem als Schiff ausgebildeten Objekt auf ein anderes relativ dazu bewegtes Objekt, mit einer an dem Schiff angebrachten Be- oder Entladeeinrichtung mit einem Transferelement, z.B. einer Plattform oder einer Leiter/einem Steg, und einer Regeleinrichtung zur Minimierung der Relativbewegung des Transferelementes relativ zu dem anderen Objekt.

Eine derartige Vorrichtung ist aus der WO 2007/120039 A1 (Technische Universität Delft) bekannt.

Eine der wichtigsten Parameter für die Wirtschaftlichkeit von Offshore installierten Anlagen, z.B. von Windkraftanlagen, ist die Zugänglichkeit. Diese wird in der Regel durch einen Index (in %) zwischen theoretischem und dem tatsächlichen Zugang ausgedrückt. Der tatsächliche mögliche Zugang hängt dabei im Wesentlichen von zwei Faktoren ab. Der eine ist die zum jeweiligen Zeitpunkt herrschende Wellenhöhe, der andere Faktor die Fähigkeit des Zugangssystems, die Wellenbewegungen möglichst vollständig auszugleichen.

Das derzeit vorherrschende Konzept ist ein Anlegemanöver, bei dem das Schiff direkt an der Windkraftanlage anlegt. Dabei wird das Schiff meist durch Vorrichtungen geführt und dadurch in den Freiheitsgraden beschränkt. Der Zugang zur Windenergieanlage (abgekürzt WEA) erfolgt in einem günstigen Augenblick direkt vom Schiff (oder dessen Ausleger) auf die Leiter oder eine Plattform an der WEA. Günstig ist der Augenblick dann, wenn die relative Bewegung zwischen Schiff und WEA möglichst gering ausfällt.

Die grundsätzlichen Schwächen dieses Konzeptes sind klar ersichtlich. Der günstige Moment zum Übertritt bleibt ein subjektives Kriterium, abhängig von der Entschlossenheit und Erfahrung desjenigen, der auf die WEA will. Das kann für den Menschen gravierende Folgen haben.

Ein zweiter wesentlicher Nachteil ist der, dass die Zugänglichkeit der WEA ihre Grenzen in den am Einsatzort vorherrschenden Wellenhöhen findet. Für die Anlegemanöver im Rahmen des "Boatlanding" ohne ein Ausschalten des Wellengangs gelten signifikante Wellenhöhen um 1,5 Meter als Grenze, welche aber insbesondere auf der Nordsee sehr häufig überschritten wird. Die Zugänglichkeit für Windkraftanlagen beträgt bei diesen konventionellen Zugangsmethoden nur ca. 55 %. Ein sicherer Zugang bei einer signifikanten Wellenhöhe von 3 m würde die Zugänglichkeit bereits auf 88 % erhöhen.

Vorrichtungen zur Erreichung des gleichen Ziels sind bereits bekannt (WO 2007/120039 A1; DE 699 17 050 T2; DE 199 46 899 A1; US 4,011,615; DE 101 53 359 A1; US 4,590,634), unterscheiden sich aber von der weiter unten beschriebenen Erfindung im Wesentlichen dadurch, dass sie:
a) nicht auf dem mobilen Objekt, sondern auf dem feststehenden Objekt montiert werden (www.pts-offshore.com) oder
b) die Relativbewegungen der Objekte nicht ausgleichen (z.B. www.sashsystem.com) oder
c) die Relativbewegungen der beiden Objekte mit anderen Techniken ausgleichen (www.ampelmann.nl und WO 2007/120039 A1).

Wesentliche Unterschiede des zuletzt genannten Ampelmann-Systems zu der beschriebenen Erfindung sind:
- Erzeugung der Ausgleichsbewegungen mittels einer hydraulischen und pneumatischen Einrichtung auf Basis einer Steward-Plattform (Hexapod).
- Nur bei der Montage auf großen und schweren Schiffen können signifikante Wellenhöhen von über 2 m ausgeglichen werden.
- Das Ampelmann-System kann in einer wirkungsvollen Größe aufgrund des benötigten Raums und des Gewichtes nicht auf kleineren Schiffen montiert werden.
- Das Ampelmann-System ist aufgrund der eingesetzten Technik erheblich aufwändiger und teurer.
- Bei Nichtgebrauch kann das Ampelmann-System aufgrund seiner Größe nicht komplett in einem seewassergeschützten Gehäuse oder dem Schiffsrumpf untergebracht werden.

Aus der o.g. DE 699 17 050 T2 ist eine Festmachvorrichtung mit einer Landungsbrücke zum Anlegen eines Schiffes an ein als Struktur bezeichnetes Objekt beschrieben. Die am Bug des Schiffes angeordnete Landungsbrücke ist an einem Ende drehbar montiert und am anderen Ende mit einer Steuervorrichtung versehen. Die Steuervorrichtung ist während des Anlegens mit Hilfe der Schiffsbewegung entlang der Oberfläche der Struktur beweglich, und mit ihr das Ende der Landungsbrücke. Diese Beweglichkeit des Endes der Landungsbrücke ermöglicht, dass eine Arretierungsvorrichtung an der Landungsbrücke an eine Befestigungsvorrichtung der Struktur automatisch ankoppelt. Dieser automatische Ankoppelmechanismus ist auf bestimmte Wellenhöhen beschränkt. Zum Transport einer Landungsbrücke werden Schiffe mit zumindest mittlerer Größe benötigt.

Außerdem sind Systeme bekannt, bei denen ein auf einem Schiff montierter Kran eingesetzt wird.

Beispielsweise ist in der US H2163 H ein Schiffskran beschrieben, mit dem ein schwimmendes Objekt bei hoher See aus dem Wasser aufgenommen werden kann. Der Schiffskran weist dazu an seinem freien Ende eine Andockeinheit auf, die durch mit Hilfe von optischen Sensoren gesteuerten Luft- oder Wasserstrahlen über eine entsprechende Einheit des schwimmenden Objektes bewegt wird. Mit dieser Anordnung werden horizontale Relativbewegungen des schwimmenden Objektes nicht jedoch vertikale Relativbewegungen ausgeglichen.

Aus der US 4,327,784 ist eine Vorrichtung zum Betanken eines Flugzeuges von einem fahrenden Schiff aus auf See bekannt. Der Apparat weist einen ersten drehbar an dem Schiff angebrachten Baum und einen zweiten drehbar an den ersten Baum angebrachten Baum auf. Am Ende des zweiten Baumes ist ein Auslass für Treibstoff vorgesehen. Die Positionen der Bäume werden so gesteuert, dass der Treibstoffauslass in einer konstanten Position bleibt, wenn das Schiff seine Position ändert.

In der US 6,505,574 B1 ist ein weiterer Schiffskran beschrieben. Dieser ist mit einem Aufzug versehen, der eine an dem Kran herunterhängende Last mit gleicher Geschwindigkeit wie die durch den Seegang verursachte in entgegengesetzte Richtung hochzieht oder runterlässt.

Der Erfindung liegt die Aufgabe zugrunde, bei einer Vorrichtung der eingangs genannten Art ein sicheres Übersetzen von Personal oder Material nicht nur bei großen und schweren Schiffen wie bei dem System nach der WO 2007/120039 A1, sondern auch bei Montage auf erheblich kleineren Schiffen zu ermöglichen und eine erheblich kompaktere Bauform der Vorrichtung zu erreichen, so dass diese Vorrichtung bei Nichtgebrauch komplett in einem vor Seewasser geschützten Gehäuse oder im Bootsrumpf untergebracht werden kann. Schließlich soll die erfindungsgemäße Vorrichtung auch deutlich weniger aufwändig sein und damit erheblich geringere Kosten verursachen.

Diese Aufgabe wird bei der Vorrichtung der eingangs genannten Art erfindungsgemäß dadurch gelöst, dass die Be- oder Entladeeinrichtung als Industrieroboter und sein Roboterarm als Tragarm ausgebildet sind. Dabei ist das Transferelement am freien Ende des Tragarms angebracht. Alternativ ist das Transferelement mit dem freien Ende des Tragarms verbindbar ausgebildet.

Vorteilhafte Ausgestaltungen der Erfindung sind in den Unteransprüchen zu finden.

Die erfindungsgemäße Vorrichtung wird zum sicheren Übersetzen von Personal oder Material von einem als Schiff ausgebildeten Objekt auf ein anderes relativ dazu bewegtes Objekt, z.B. auf eine Offshore-Windenergieanlage, auf andere Offshore-Objekte oder auf andere Schiffe, und zurück eingesetzt.

Das Transferelement ist z.B. eine Plattform oder Leiter/Steg. Eine Be- oder Entladeeinrichtung, die als Industrieroboter mit einem Roboterarm als Tragarm für das Transferelement ausgebildet ist, ist eine verhältnismäßig kleine Einrichtung, die auf kleineren Schiffen einsetzbar ist. Ein Industrieroboter mit einem Roboterarm wird auch als Gelenkarmroboter bezeichnet, dessen Roboterarm mehrere seriell durch Gelenke miteinander verbundene Armelemente aufweist. Ein derartiger Industrieroboter hat 5 oder 6 Rotationsachsen. Ein Beispiel für einen solchen Industrieroboter ist ein sechsarmiger Industrieroboter mit Gelenkkinematik der Firma Kuka aus der Reihe KR 500.

Besonders wichtige Vorteile der Erfindung gegenüber vergleichbaren Systemen bestehen darin, dass
- keine Umweltbelastung durch austretendes Öl entstehen kann,
- die Vorrichtung sehr kompakt gebaut ist,
- leichter ist,
- preiswerter ist,
- keine Nebenaggregate wie Kompressor oder Hydraulikaggregat benötigt.

Erreicht wird dies unter anderem dadurch, dass die Vorrichtung elektrisch geregelt und angetrieben wird.

Ein weiterer wesentlicher Vorteil gegenüber einer aus der WO 2007/120039 A1 bekannten Stewardplattform ist, dass statt der parallelen Kinematik des Hexapods eine serielle Kinematik, nämlich ein Gelenkarmroboter, eingesetzt wird. Dies ermöglicht eine Bewegungskompensation auf kleinem Raum und damit den Einsatz auf kleineren Schiffen.

Vorzugsweise ist der Tragarm in mindestens 6 Freiheitsgraden bewegbar. Dazu weist die erfindungsgemäße Vorrichtung als Be- oder Entladeeinrichtung z.B. einen sechsachsigen Industrieroboter auf, dessen 6 Achsen 6 Freiheitsgrade ermöglichen.

Vorzugsweise ist der als Tragarm ausgebildete Roboterarm mittels Servomotoren bewegbar. Die Regeleinrichtung zur Minimierung der Relativbewegung des mit dem Roboterarm verbundenen Transferelementes steuert die den Roboterarm bewegenden Servomotoren an.

Vorzugsweise ist eine erfindungsgemäße Vorrichtung mit einer Sicherheitssteuereinheit versehen, durch die der Tragarm in eine Sicherheitsposition bewegbar ist. Bei Blockade einer oder mehrerer Roboterachsen wird der Tragarm durch die Sicherheitssteuereinheit über die verbleibenden Achsen in die Sicherheitsposition bewegt.

In einer Ausführungsform weist eine erfindungsgemäße Vorrichtung eine Verstellvorrichtung auf, an der der Industrieroboter auf dem Schiff höhen-, seiten- und längsverstellbar angeordnet ist. Durch die Verstellvorrichtung ist der Tragarm in weiteren Freiheitsgraden zusätzlich zu den durch die Bewegungsfähigkeit des Roboterarmes möglichen Freiheitsgraden bewegbar. Ein möglicher Arbeitsbereich, auch Arbeitsraum genannt, des Tragarms wird durch diese bis zu 3 Bewegungsachsen vergrößert.

In einer Ausführungsform weist eine erfindungsgemäße Vorrichtung eine zusätzliche oder alternative Verstellvorrichtung auf, die eine Rückstelleinheit umfasst, an der der Industrieroboter selbst auf dem Schiff zwischen einer Sicherheitsstellung und einer Arbeitsstellung verstellbar angeordnet ist. Die Rückstelleinheit weist beispielsweise Schienen und einen darin geführten Schlitten für den Industrieroboter auf. Ein am Heck oder am Bug des Schiffes angeordneter Industrieroboter ist beispielsweise entlang einer Achse, und zwar in Längsrichtung, ins Innere des Schiffes verstellbar angeordnet.

In der Sicherheitsstellung ist ein Arbeitsbereich des Industrieroboters so angeordnet, dass eine Kollision mit Objekten außerhalb der Schiffsgeometrie ausgeschlossen ist. Der Arbeitsbereich des Industrieroboters ist durch seine Positionierung auf dem Schiffsdeck und eine mechanische und ggf. elektronische Begrenzung der Roboterachsen bestimmt.

In der Arbeitsstellung ist der Arbeitsbereich des Industrieroboters durch seine geänderte Positionierung auf dem Schiffsdeck so angeordnet, dass der Industrieroboter mit seinem Roboterarm auch außerhalb der Schiffsgeometrie agieren kann.

Die Verstelleinheit weist vorzugsweise eine Spanneinheit auf, durch die der Industrieroboter gegen eine, insbesondere sich aufbauende, Vorspannung in die Arbeitsstellung fahrbar ist und durch die der Industrieroboter zum automatischen Fahren in die Sicherheitsstellung freigegeben wird. Mit Hilfe der Spanneinheit wird der Industrieroboter unter Energiezufuhr, vorzugsweise unter Zufuhr von elektrischer, pneumatischer oder hydraulischer Energie, zur Erzeugung der Vorspannung, z.B. durch das Spannen von Federn, aus der Sicherheitsstellung in die Arbeitsstellung gefahren. Die zugeführte Energie wird in den Spannelementen, z.B. in den Federn, gespeichert.

Vorzugsweise weist eine Spanneinheit Halteelemente zur Arretierung des Industrieroboters auf, die ebenfalls unter Energiezufuhr den Industrieroboter in der Arbeitsstellung halten. Die Halteelemente sind z.B. elektrische, pneumatische oder hydraulische Klemmzylinder. Die Halteelemente öffnen sich bei Stromausfall automatisch oder bei einem anderen Notfall gesteuert und geben den Industrieroboter frei, der dann durch Freigabe der in den Spannelementen gespeicherten Energie automatisch in die Sicherheitsstellung fährt. Eine Energiezufuhr zum Fahren in die Sicherheitsstellung ist nicht notwendig. Die Spanneinheit ermöglicht z.B. bei Stromausfall ein automatisches Fahren des Industrieroboters in die Sicherheitsstellung. Dadurch wird vermieden, dass es bei Stromausfall zu Kollisionen mit Objekten außenbords kommen kann.

Vorzugsweise weist bei dieser Ausführungsform die erfindungsgemäße Vorrichtung eine Verstellsteuereinheit auf, mit der die Verstelleinheit ansteuerbar ist und die das Verstellen des Industrieroboters ansteuert und durch die z.B. bei Stromausfall der Industrieroboter freigebbar ist. Mit der Verstelleinheit ist insbesondere die Spanneinheit ansteuerbar.

In einer Ausführungsform weist die erfindungsgemäße Vorrichtung eine Schutzvorrichtung für den Industrieroboter und gegebenenfalls das Transferelement für die Zeit des Nichtgebrauchs auf. Diese Schutzvorrichtung schützt insbesondere vor den Einflüssen von Salzwasser.

In einer Alternative der Erfindung ist das Transferelement als mindestens eine Plattform ausgebildet und am freien Ende des Tragarms angebracht. Eine Plattform ist zum sicheren Übersetzen von Personen vorzugsweise mit Sicherheitselementen, z.B. einem Personenkorb oder einem Personenkäfig, versehen. Vorzugsweise sind geschlossene, d.h. blickdichte Seitenwände, vorgesehen. Vorzugsweise ist eine Übergabeeinheit zum sicheren Übersetzen von Material auf der Oberseite der Plattform bzw. des Käfigs angeordnet oder ausgebildet. Eine alternative oder zusätzliche Plattform ist zum sicheren Übersetzen von Material vorzugsweise als Lastübergabeeinheit ausgebildet, auf der das Material bewegungskompensiert z.B. für einen Bordkran einer Windenergieanlage bereit gestellt wird. Es können z. B. zwei verschiedene Plattformen abwechselnd am Tragarm angebracht sein.

In einer weiteren Alternative ist das Transferelement als ein Steg, z.B. als eine Landungsbrücke, ausgebildet, wobei das Transferelement mit dem freien Ende des Tragarms verbindbar ausgebildet ist.

Die Erfindung betrifft auch ein Schiff mit einer erfindungsgemäßen Vorrichtung. Das Schiff ist vorzugsweise verhältnismäßig klein ausgebildet, vorzugsweise mit einer Länge von circa 25 bis 30 m und vorzugsweise mit einer Verdrängung von circa 25 bis 30 t. Mit einem erfindungsgemäßen Schiff wird die Zugänglichkeit auf See, z.B. von Windenergieanlagen, wesentlich erhöht.

Im Folgenden werden Ausführungsbeispiele der Erfindung anhand von Zeichnungen näher beschrieben. Es zeigen:

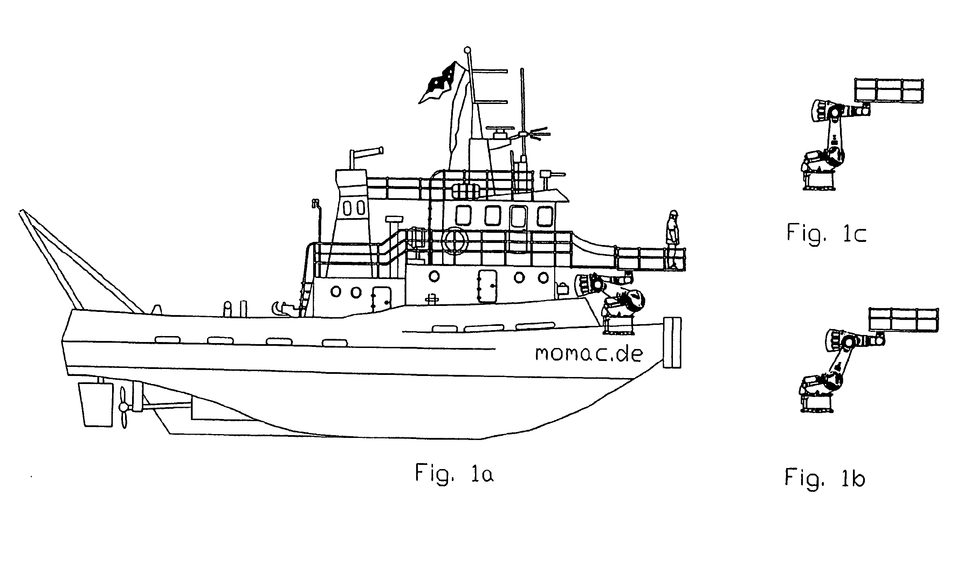

- Figur 1a: eine Übersichtsdarstellung eines Schiffs mit der erfindungsgemäßen Anordnung eines ersten Ausführungsbeispiels in einer Seitenansicht;
- Figur 1b: eine Detailansicht aus Figur 1a, nämlich die erfindungsgemäße Vorrichtung mit der Plattform im eingefahrenen Zustand;
- Figur 1c: eine Darstellung entsprechend Figur 1b, aber mit der Plattform im teilweise ausgefahrenen Zustand;

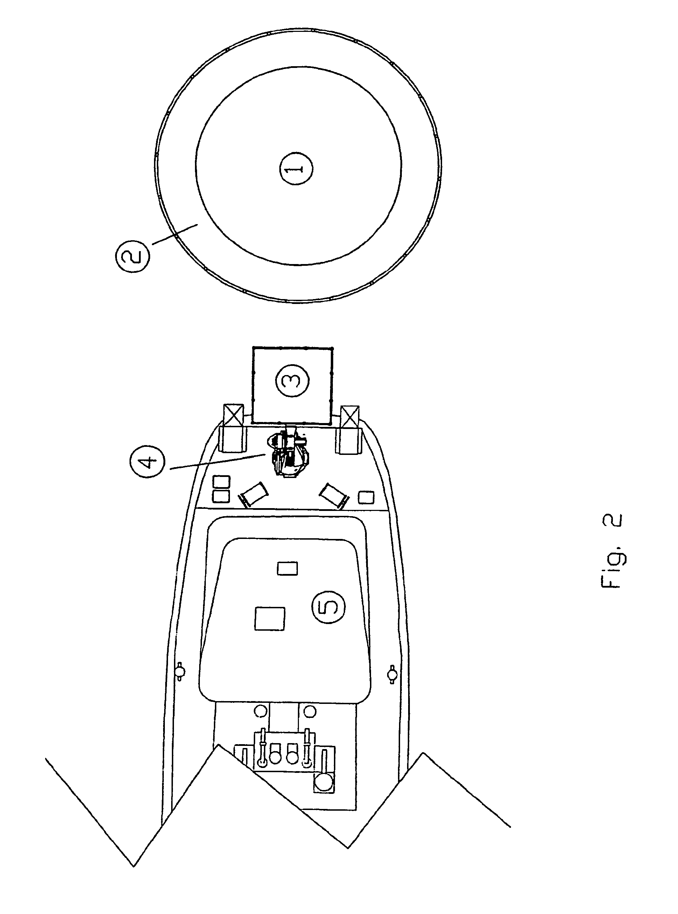

- Figur 2: eine Draufsicht auf das Schiff mit der erfindungsgemäßen Vorrichtung gemäß Figur 1 a bei der Annäherung an eine Windenergieanlage;

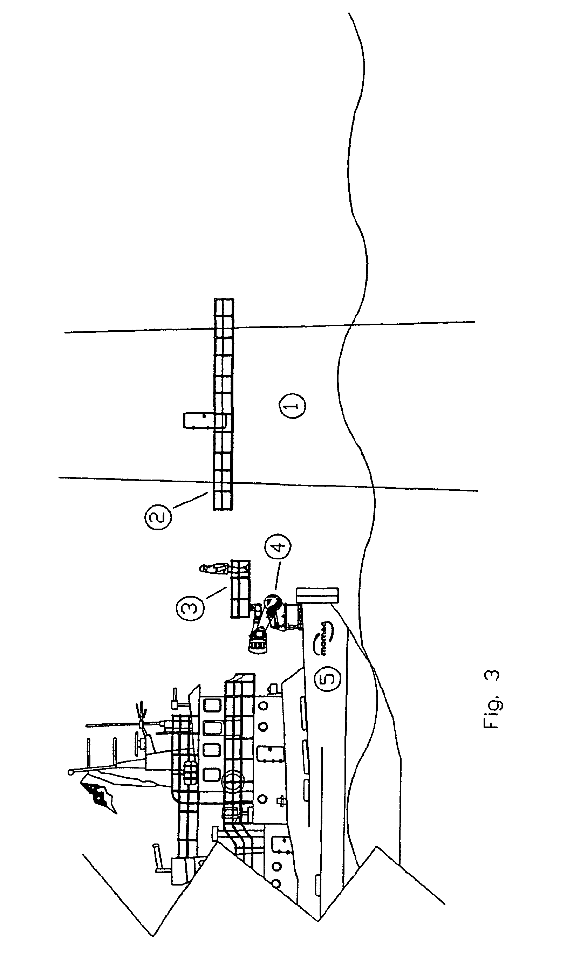

- Figur 3: eine Seitenansicht der Anordnung nach Figur 2 in einer ersten Position;

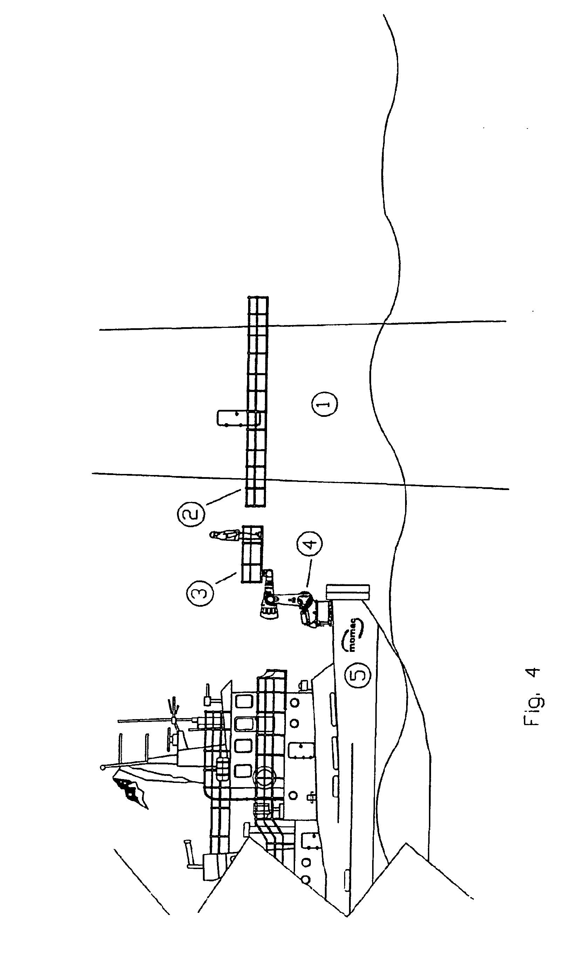

- Figur 4: eine Darstellung gemäß Figur 3, aber zu einem späteren Zeitpunkt, in welchem sich die Plattform in einer Zwischenposition (Position 2) befindet;

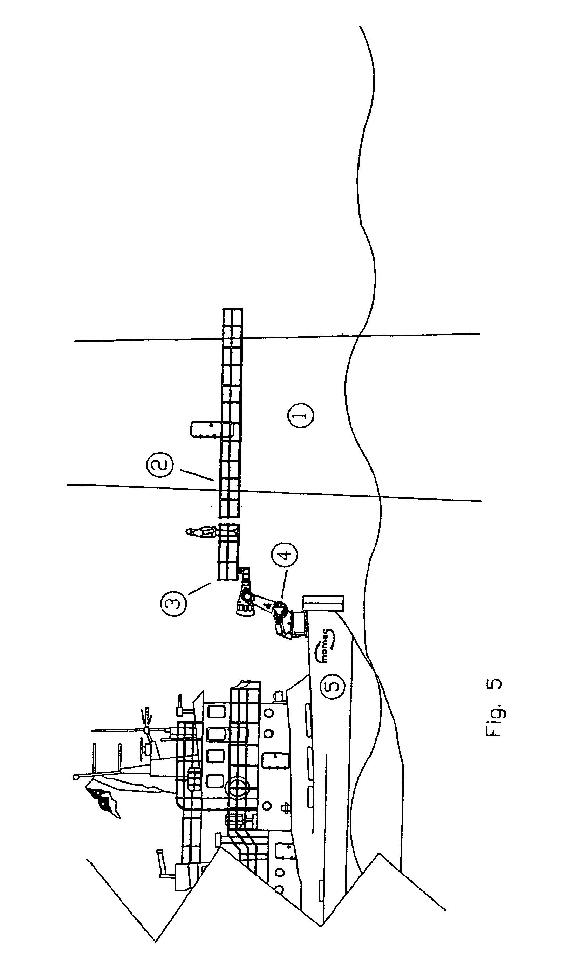

- Figur 5: eine Darstellung gemäß Figur 3 zu einem noch späteren Zeitpunkt, in welchem sich die Plattform in der vorgesehenen Lage befindet, um Personal und Material zu und von der Windenergieanlage zu überführen;
- Figur 6a: eine schematische Darstellung eines zweiten erfindungsgemäßen Ausführungsbeispiels, und zwar eines Schiffes mit einem Industrieroboter an einer Windenergieanlage in einer Seitenansicht;
- Figur 6b: eine Darstellung nach Figur 6a in einer Draufsicht auf das Schiff an der Windenergieanlage;

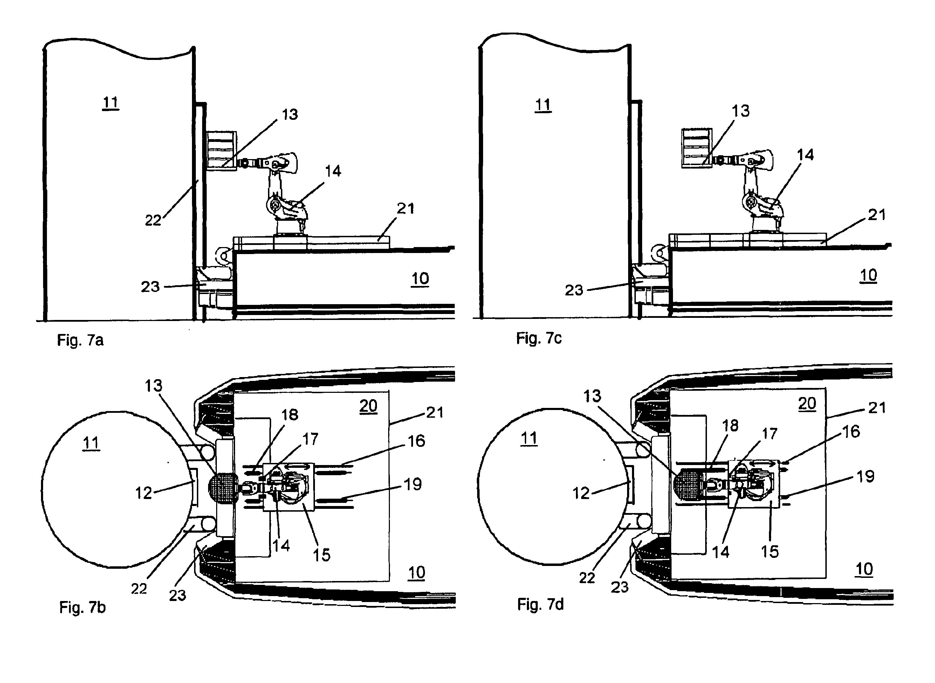

- Figur 7a: einen vorderen Abschnitt der Seitenansicht der Figur 6a, wobei sich der Industrieroboter in einer Arbeitsstellung befindet;
- Figur 7b: einen vorderen Abschnitt der Draufsicht auf das in Figur 7a dargestellte Schiff an der Windenergieanlage;
- Figur 7c: einen vorderen Abschnitt einer Seitenansicht entsprechend der Figur 7a, wobei sich der Industrieroboter in einer Sicherheitsstellung befindet;
- Figur 7d: einen vorderen Abschnitt einer Draufsicht auf das in Figur 7c dargestellte Schiff an der Windenergieanlage;
- Figur 8a: eine schematische Darstellung eines dritten erfindungsgemäßen Ausführungsbeispiels, und zwar eines Schiffes mit einem Industrieroboter und einem als Landungsbrücke ausgebildeten Transferelementes;
- Figur 8b: eine Darstellung nach Figur 8a in einer Draufsicht;

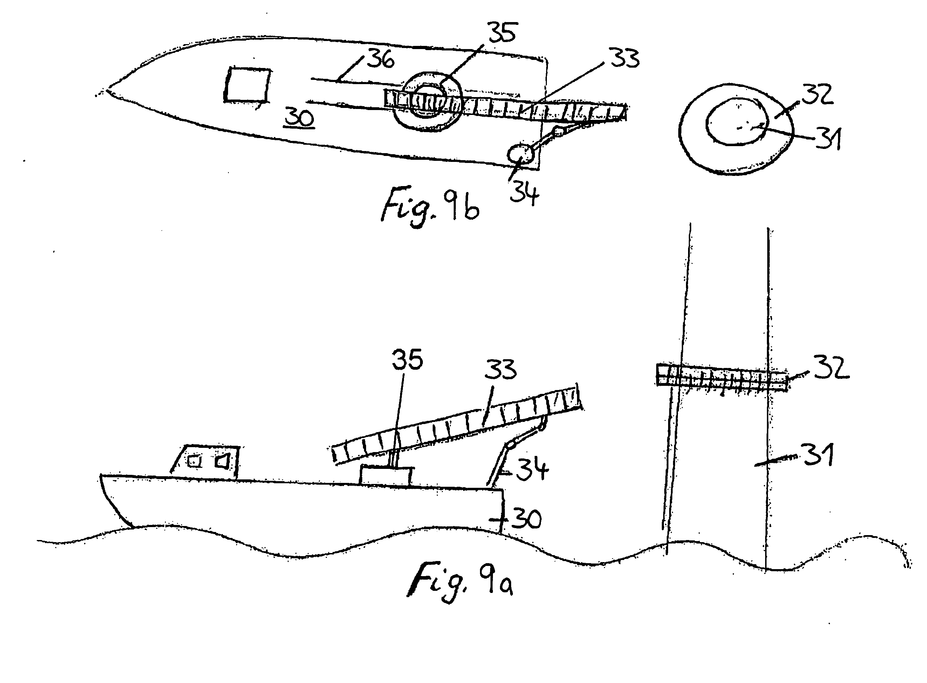

- Figur 9a: eine Seitenansicht entsprechend der Figur 8a, wobei die Landungsbrücke ausgefahren ist;
- Figur 9b: eine Draufsicht auf das in 9a dargestellte Schiff,

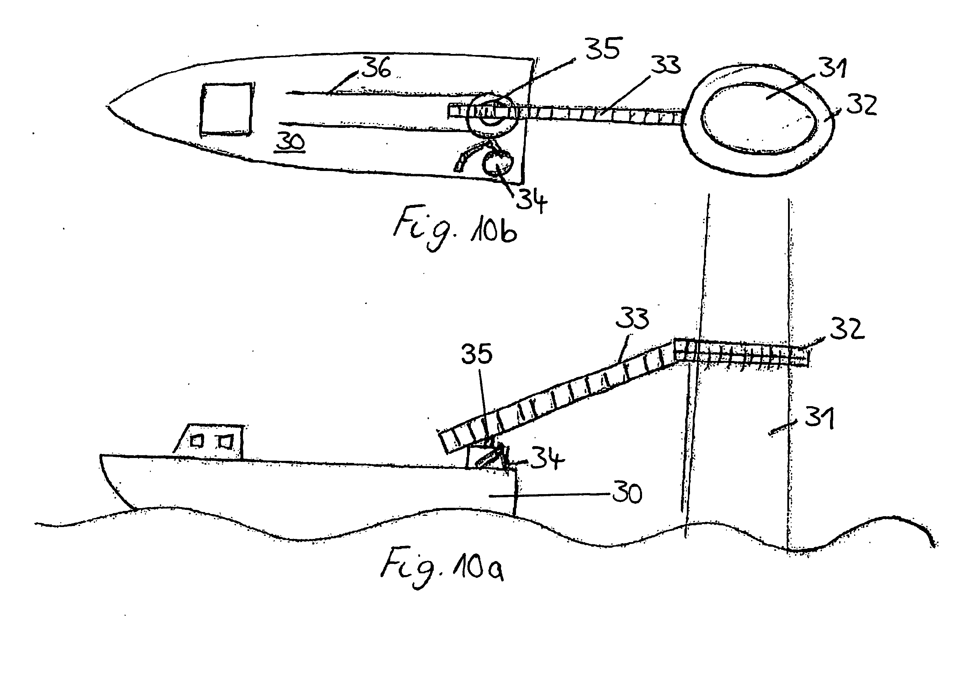

- Figur 10a: eine Seitenansicht entsprechend der Figur 8a, wobei die Landungsbrücke angekoppelt ist; und
- Figur 10b: eine Draufsicht auf das in Figur 10a dargestellte Schiff.

In allen Zeichnungen haben gleiche Bezugszeichen die gleiche Bedeutung und werden daher gegebenenfalls nur einmal erläutert.

### Ausführungsbeispiel 1:

In den Zeichnungen ist ein Schiff 5 mit der erfindungsgemäßen Be- und Entladeeinrichtung 4 dargestellt, die in einer konkreten Ausführungsform ein an sich bekannter Industrieroboter sein kann. Am Ende dieser Einrichtung 4 ist eine Plattform 3 angebracht, mit dessen Hilfe Personen und Material auf einen umlaufenden "Balkon" 2 der Windenergieanlage gebracht werden können. Dieser Balkon ist an dem Turm 1 der Windenergieanlage angebracht.

Die erfindungsgemäße Vorrichtung dient zum sicheren Übersetzen von Personal oder Material von einem bewegten Objekt auf ein feststehendes oder ebenfalls bewegtes Objekt.

Die erfindungsgemäße Vorrichtung ist geeignet, auf einem bewegten Objekt (z.B. Schiff) montiert zu werden und dort selbstständig die Bewegung des Schiffes relativ zu einem
- fest in der Umgebung stehenden Objekt (z.B. Offshore-Windkraftanlage / Bohrplattform) oder
- sich bewegenden Objekt (z.B. Schiff)
zu kompensieren.

Mit dieser Vorrichtung ist es möglich, dass z.B. Personen oder Lasten auch bei stark bewegter See sicher auf andere Objekte (fest stehende oder sich bewegende Objekte) übersteigen können.

Die hier im Ausführungsbeispiel beschriebene Vorrichtung besteht aus:
- einem in bis zu 6 Achsen gleichzeitig mittels Servomotoren bewegbaren Tragarm (Roboterarm),
- einer 7. Achse und 8. Achse und 9. Achse in Form einer Vorrichtung zur Höhen-/Seiten- und Längsverstellung des gesamten Tragarms, um besonders große Wellenbewegungen und Positionsveränderungen des Schiffes auszugleichen. Die 7., 8. und/oder 9. Achse kann auch hydraulisch ausgeführt werden.
- einer am "freien Ende" des Roboters befestigten Plattform, welche geeignet ist, Personen oder Lasten sicher aufzunehmen und den Wellengang auszugleichen,
- einer elektrischen Regelung, um die Position der Plattform im Verhältnis zu einem weiteren Objekt zu fixieren (Minimierung der Relativbewegung) sowie ungewollte Kollisionen mit anderen Objekten zu vermeiden, und zwar
   o absolut bezogen auf die Bewegung (Ausgleich gegen stehendes Objekt/Umfeld), d.h. die Sensorik in der Plattform registriert absolute Bewegung,
   o relativ bezogen auf ein sich ebenfalls bewegendes Objekt, so dass die Bewegung relativ zu diesem bewegten Objekt ebenfalls ausgeglichen wird.
- einer Schutzeinrichtung vor Salzwassereinflüssen auf die Vorrichtung für die Zeit des Nichtgebrauchs.

Das Schiff 5 ist mit einem Autopositioniersystem (APS) ausgestattet, welches das Schiff 5 mittels Motorkraft auch bei bewegter See auf der Position hält. Das Schiff 5 berührt den Turm 1 beim Übersetzvorgang bei diesem Ausführungsbeispiel nicht.

### Ausführungsbeispiel 2:

Eine erfindungsgemäße Vorrichtung des zweiten Ausführungsbeispiels entspricht der des ersten Beispiels bis auf folgende ergänzende oder alternative Merkmale.

Eine erfindungsgemäße Vorrichtung zum sicheren Übersetzen von Personal oder Material von einem Schiff 10 auf ein anderes relativ dazu bewegtes Objekt, und zwar z.B. auf eine Windenergieanlage mit einem Turm 11 über eine am Turm befestigte Leiter 12, ist auf dem erfindungsgemäßen Schiff 10 angeordnet. Das Schiff 10 ist als Katamaran ausgebildet, wobei sich die erfindungsgemäße Vorrichtung auf seinem Heck befindet. Die erfindungsgemäße Vorrichtung weist ein als Plattform 13 ausgebildetes Transferelement, eine als Industrieroboter 14 ausgebildete Be- oder Entladeeinrichtung und eine Regeleinrichtung zur Minimierung der Relativbewegung des Transferelementes, d.h. der Plattform 13, relativ zum Turm 11 der Windenergieanlage auf. Ein Roboterarm des Industrieroboters 14 ist als Tragarm ausgebildet, an dessen freien Ende die Plattform 13 angebracht ist. Der Industrieroboter 14 ist als sechsachsiger Gelenkarmroboter ausgebildet, so dass der Tragarm um 6 Achsen und damit in 6 Freiheitsgraden bewegbar ist. Der Tragarm ist mittels Servomotoren bewegbar. Die Regeleinrichtung ist an die Servomotoren angeschlossen und steuert diese an. Die Regeleinrichtung ist mit einer Sensoreinheit verbunden, die die Bewegungen des Schiffs 10 aufnimmt und entsprechende Signale an die Regeleinrichtung weitergibt.

Die Vorrichtung ist mit einer Sicherheitssteuereinheit zur Sicherung z.B. von Personal versehen, durch die der Tragarm z.B. im Notfall in eine Sicherheitsposition bewegbar ist. Ein Notfall kann z.B. eine erkannte Gefahrensituation, z.B. eine Blockade einer oder mehrerer Roboterachsen, sein.

Die Vorrichtung weist eine Verstellvorrichtung mit einer Rückstelleinheit auf, an der der Industrieroboter 14 auf dem Schiff 10 zwischen einer Arbeitsstellung und einer Sicherheitsstellung verstellbar angeordnet ist. Die Rückstelleinheit umfasst einen Schlitten 15, auf dem der Industrieroboter 14 angeordnet ist und Schienen 16, in denen der Schlitten 15 geführt ist. Die Schienen 16 sind in diesem Ausführungsbeispiel, bei dem der Industrieroboter 14 am Heck des Schiffs 10 angeordnet ist, parallel zur Längsachse am Heck verlegt.

Die Rückstelleinheit umfasst weiterhin eine Spanneinheit, durch die der Industrieroboter 14 gegen eine Vorspannung in die Arbeitsstellung fahrbar ist und durch die der Industrieroboter 14 z.B. im Notfall zum automatischen Fahren in die Sicherheitsstellung freigebbar ist. Die Spanneinheit weist parallel zu den Schienen 16 verlaufende Spannelemente, z.B. Spannfedern oder Hydraulikzylinder, und Halteelemente 17 auf. Die Spannelemente sind als Druckelemente 18 und als Zugelemente 19 ausgebildet und mit dem den Industrieroboter 14 tragenden Schlitten 15 verbunden. Die Halteelemente 17, von denen in der Zeichnung nur deren Position am Schlitten 15 zu sehen ist, halten den Schlitten 15 in der Arbeitsstellung an den Schienen 16 unter der Vorspannung der Spannelemente. Die Vorspannung wird durch das Fahren des Schlittens 15 mit dem Industrieroboter 14 aus der Arbeitsstellung in die Sicherheitsstellung aufgebaut. Dabei üben die zwischen Heck und Schlitten 15 angeordneten Druckelemente 18 Druckkraft auf den Schlitten 15 aus und die zwischen Schlitten 15 und einer inneren Stellung angeordneten Zugelemente 19 Zugkraft auf den Schlitten 15 aus. Beim Lösen der Halteelemente 17 wird der Schlitten 15 und damit der Industrieroboter 14 automatisch durch die Druckelemente 18 und die Zugelemente 19 entlang der Schienen 16 in die Sicherheitsstellung gefahren.

Die Vorrichtung weist eine Verstellsteuereinheit auf, mit der die Verstellvorrichtung ansteuerbar ist. Dabei sind insbesondere die Halteelemente 17 der Spanneinheit so ansteuerbar, dass sie z.B. bei Stromausfall oder einem anderen Notfall automatisch gelöst werden und den Schlitten 15 mit dem Industrieroboter 14 freigeben.

Die Vorrichtung ist weiterhin mit einer in der Zeichnung nicht dargestellten Schutzeinrichtung für den Industrieroboter 14 und für das als Plattform 13 ausgebildete Transferelement zum Schutz vor Seewasser versehen, die bei Nichtgebrauch eingesetzt wird. Die Schutzeinrichtung weist beispielsweise eine Ummantelung für den Industrieroboter 14 mit der Plattform 13 auf.

Die Plattform 13 ist mit Sicherheitselementen für das Übersetzen von Personal versehen. Insbesondere weist die Plattform 13 einen in der Zeichnung angedeuteten Käfig auf, der an einer Überstiegsseite offen ist und an einer gegenüberliegenden Zugangsseite eine die Sicht auf eine Person ermöglichende Gittertür sowie geschlossene und damit blickdichte Seitenwände und eine Decke aufweist. Zur Sicherung einer Person sind auf der Plattform 13 zusätzlich ein Sattel, seitliche Polsterungen an den Seitenwänden, Kopfpolsterungen an der Decke, Sicherheitsgurte, eine Wechselsprechanlage sowie Totmanschalter vorgesehen.

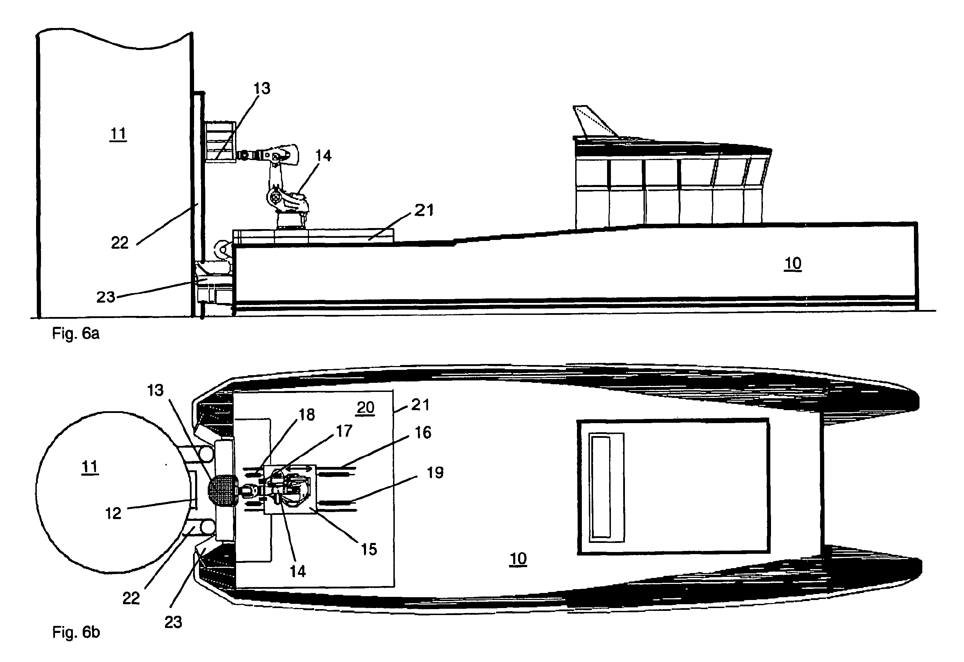

Auf dem Schiff 10 ist um die Rückstelleinheit mit dem auf dem Schlitten 15 angeordneten Industrieroboter 14 ein in der Figur 6b gekennzeichneter Sicherheitsbereich 20, z.B. mit einem als einen Gitterzaun ausgebildeten Schutzzaun 21, abgetrennt.

In einer Ausführungsform ist auf der Plattform 13, und zwar auf der Oberseite der Decke des Käfigs, eine Übergabeeinheit ausgebildet, von der aus Material z.B. Werkzeug und/oder andere Lasten auf die Windenergieanlage übergeben werden können. Auf dieser Übergabeeinheit werden das Werkzeug und/oder die Lasten durch den Industrieroboter 14 bewegungskompensiert für z.B. einen Bordkran der Windenergieanlage bereitgestellt.

Um einen gewissen Sicherheitsabstand zwischen dem Turm 11 der Windenergieanlage und dem Schiff 10 sicherzustellen, ist der Turm 11 mit Abstandspollern 22 und das Schiff 10 mit Rollenpfändern 23 versehen, wobei die Rollenpfänder 23 bei Heranfahren des Schiffes 10 an den Turm 11 als Führungen für die Abstandspoller 22 dienen. Dies ist in Figur 6b dargestellt.

Zum sicheren Übersetzen von Personal fährt das Schiff 10 mit den Rollenpfändern 23 an seinem Heck gegen die Abstandspoller 22 und damit in eine definierte Position mit einem bestimmten Abstand vor die Leiter 12 des Turmes 11 der Windenergieanlage.

Danach betritt eine Person die Plattform 13, welche in einer Einstiegsposition steht, und sichert sich mit den Sicherheitselementen. Anschließend wird sie durch den Industrieroboter 14 relativ zum Schiff 10 bewegt, so dass ihre Relativbewegung bezüglich des Turmes 11 minimiert wird. Sie kann dann auf die Leiter 12 übersteigen.

Im Notfall wird der Roboterarm in eine Sicherheitsposition bewegt und/oder der gesamte Industrieroboter 14 automatisch in die Sicherheitsstellung gefahren. In dieser Sicherheitsstellung ist es ausgeschlossen, dass die Plattform 13 mit Objekten außerhalb der Schiffskonturen (außerbords) kollidieren kann.

In einer alternativen Ausführungsform ist die Plattform 13 als reine Lastübergabeeinheit für die Übergabe von Material z.B. Werkzeug und/oder Lasten ausgebildet. Auf der Lastübergabeeinheit werden das Werkzeug und/oder andere Lasten durch den Industrieroboter 14 bewegungskompensiert z.B. für einen Bordkran der Windenergieanlage bereit gestellt.

In einer weiteren Alternative sind zwei Plattformen 13 vorgesehen, wobei eine Plattform 13 mit einem Käfig versehen ist und eine Plattform 13 als Lastübergabeeinheit ausgebildet ist und wobei die Plattformen 13 je nach Einsatz abwechselnd am freien Ende des Tragarms angebracht sind.

### Beispiel 3:

Eine nicht erfindungsgemäße Vorrichtung eines dritten Beispiels entspricht dem des zweiten Ausführungsbeispiels bis auf die folgenden Merkmale.

Die Vorrichtung ist ebenfalls auf dem Heck eines Schiffes 30 angeordnet, das zum sicheren Übersetzen von Personal oder Material z.B. auf einer Bohrinsel eingesetzt wird. Die Bohrinsel weist einen Turm 31 und einen am Turm 31 angebrachten, umlaufenden Balkon 32 auf.

Die Vorrichtung weist ein als Landungsbrücke 33 ausgebildetes Transferelement und eine als Industrieroboter 34 ausgebildete Be- oder Entladeeinrichtung auf. Die Landungsbrücke 33 ist so ausgebildet, dass ihr an den Turm 31 anzukoppelndes

Ende mit dem freien Ende des Tragarms des Industrieroboters 34 verbindbar ist. Das anzukoppelnde Ende der Landungsbrücke 33 weist Koppelelemente auf, die mit entsprechenden Koppelelementen an dem am Turm 31 angebrachten Balkon 32 form- und/oder kraftschlüssig verbindbar sind.

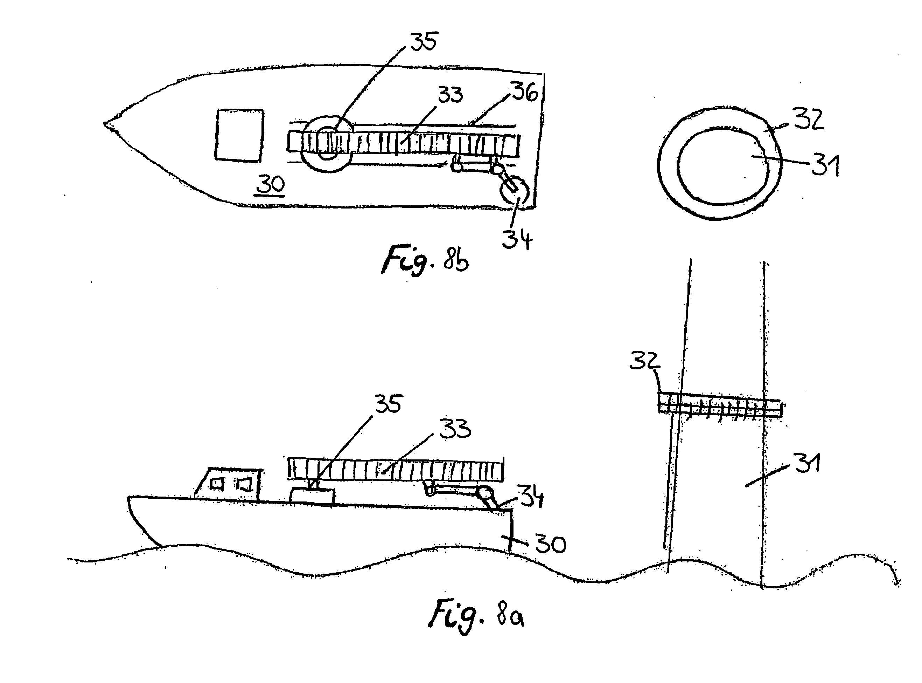

An ihrem entgegen gesetzten Ende ist die Landungsbrücke 33 auf einer auf dem Schiff angeordneten Befestigungseinheit frei drehbar, insbesondere vertikal und horizontal schwenkbar, angeordnet. In einer in den Figuren 8a, b dargestellten Ruhestellung erstreckt sich die Landungsbrücke 33 in Längsrichtung auf dem Schiff 30. Die Befestigungseinheit 35 mit der Landungsbrücke 33 ist an einer Verschiebeeinrichtung 36, z.B. mit auf dem Schiff 30 in Längsrichtung verlaufenden Schienen, angeordnet.

Der Industrieroboter 34 befindet sich seitlich neben der Landungsbrücke 33 auf dem Heck des Schiffes 30.

In einer Alternative ist die erfindungsgemäße Vorrichtung mit einer nicht dargestellten Verstelleinrichtung versehen, an der der Industrieroboter zumindest höhenverstellbar angeordnet ist. Zusätzlich oder alternativ ist die Verstellvorrichtung auch zur Seiten- und Längsverstellbarkeit des Industrieroboters 34 ausgebildet.

In einer weiteren Alternative weist die erfindungsgemäße Vorrichtung eine Schutzvorrichtung zum Schutz vor Seewasser nur für den Industrieroboter 34 auf.

Zum sicheren Übersetzen von Personal oder Material fährt das Schiff 30 mit seinem Heck an den Turm 31, wobei seine Rollenpfänder gegen Abstandspoller des Turmes 31 drücken. Das freie Ende des Tragarms des Industrieroboters 34 wird mit dem anzukoppelnden Ende oder mit einem mittleren Abschnitt der Landungsbrücke 33 verbunden. Der Industrieroboter 34 zieht die Landungsbrücke 33 entlang der Verschiebeeinrichtung 36 nach außen und führt das anzukoppelnde Ende der Landungsbrücke 33 zu dem Balkon 32, wo die Landungsbrücke 33 an den Balkon 32 angekoppelt wird. Nach dem Ankoppelvorgang lässt der Industrieroboter 34 die Landungsbrücke 33 wieder los und fährt bis zum Abkoppelvorgang in eine Ruheposition zurück. Eine Person kann nun über die sich frei bewegende Landungsbrücke 33 auf den Balkon 32 hinübergehen.

### Bezugszeichenliste

- 1: Turm der Windenergieanlage
- 2: umlaufender Balkon der Windenergieanlage
- 3: Plattform (Transferelement)
- 4: Be- und Entladeeinrichtung (Industrieroboter)
- 5: Schiff
- 10: Schiff
- 11: Turm einer Windenergieanlage
- 12: Leiter
- 13: Plattform (Transferelement)
- 14: Industrieroboter
- 15: Schlitten
- 16: Schienen
- 17: Halteelemente
- 18: Druckelement
- 19: Zugelement
- 20: Sicherheitsbereich
- 21: Schutzzaun
- 22: Abstandspoller
- 23: Rollenpfänder
- 30: Schiff
- 31: Turm einer Bohrinsel
- 32: Balkon
- 33: Landungsbrücke (Transferelement)
- 34: Industrieroboter
- 35: Befestigungseinheit
- 36: Verschiebeeinheit

## Patentansprüche

1. Vorrichtung zum sicheren Übersetzen von Personal oder Material von einem als Schiff ausgebildeten Objekt auf ein anderes relativ dazu bewegtes Objekt, mit einer schiffseigenen Be- oder Entladeeinrichtung, mit einem Transferelement und einer Regeleinrichtung zur Minimierung der Relativbewegung des Transferelementes relativ zu dem anderen Objekt,
**dadurch gekennzeichnet, dass** die Be- oder Entladeeinrichtung als Industrieroboter (4, 14, 34) und sein Roboterarm als Tragarm ausgebildet sind, wobei das Transferelement am freien Ende des Tragarms angebracht ist oder mit dem freien Ende des Tragarms verbindbar ausgebildet ist.

2. Vorrichtung nach Anspruch 1, **dadurch gekennzeichnet, dass** der Tragarm in mindestens 6 Freiheitsgraden bewegbar ist.

3. Vorrichtung nach Anspruch 1 oder 2, **dadurch gekennzeichnet, dass** der Tragarm mittels Servomotoren bewegbar ist, wobei die Servomotoren durch die Regeleinrichtung ansteuerbar sind.

4. Vorrichtung nach einem der Ansprüche 1 bis 3 **gekennzeichnet durch** eine Sicherheitssteuereinheit, **durch** die der Tragarm in eine Sicherheitsposition bewegbar ist.

5. Vorrichtung nach einem der Ansprüche 1 bis 4 **gekennzeichnet durch** eine Verstellvorrichtung, an der der Industrieroboter (4, 14, 34) auf dem Schiff höhen-, seiten- und längsverstellbar angeordnet ist.

6. Vorrichtung nach einem der Ansprüche 1 bis 5, **gekennzeichnet durch** eine Verstellvorrichtung mit einer Rückstelleinheit, an der der Industrieroboter (14) auf dem Schiff (10) zwischen einer Sicherheitsstellung und einer Arbeitsstellung verstellbar angeordnet ist.

7. Vorrichtung nach Anspruch 6, **dadurch gekennzeichnet, dass** die Rückstelleinheit eine Spanneinheit aufweist, durch die der Industrieroboter (14) gegen eine Vorspannung in die Arbeitsstellung fahrbar und zum automatischen Fahren in die Sicherheitsstellung freigebbar ist.

8. Vorrichtung nach Anspruch 6 oder 7, **gekennzeichnet durch** eine Verstellsteuereinheit, mit der die Verstellvorrichtung ansteuerbar ist.

9. Vorrichtung nach einem der Ansprüche 1 bis 8, **gekennzeichnet, durch** eine Schutzvorrichtung für den Industrieroboter (4, 14, 34) und ggf. das Transferelement.

10. Vorrichtung nach einem der Ansprüche 1 bis 9, **dadurch gekennzeichnet, dass** das Transferelement als mindestens eine Plattform (3, 13) ausgebildet und am freien Ende des Tragarms angebracht ist.

11. Vorrichtung nach einem der Ansprüche 1 bis 9, **dadurch gekennzeichnet, dass** das Transferelement als Landungsbrücke (33) ausgebildet ist.

12. Anordnung mit einem Schiff (5, 10, 30) und einer Vorrichtung nach einem der vorangegangenen Ansprüche.

## Claims

1. Device for safely transferring personnel or material from an object in the form of a boat to another object moved relative thereto, comprising a boat-side loading or unloading device, a transfer element and a control device for minimising the movement of the transfer element relative to the other object,
**characterised in that** the loading or unloading device is in the form of an industrial robot (4, 14, 34) and its robot arm is in the form of a support arm, the transfer element being attached to the free end of the support arm or being configured so that it can be connected to the free end of the support arm.

2. Device according to claim 1, **characterised in that** the support arm can be moved in at least six degrees of freedom.

3. Device according to claim 1 or 2, **characterised in that** the support arm can be moved by means of servomotors, the servomotors being controllable by the control system.

4. Device according to any one of claims 1 to 3, **characterised by** a safety control unit by means of which the support arm can be moved into a safety position.

5. Device according to any one of claims 1 to 4, **characterised by** an adjusting device on which the industrial robot (4, 14, 34) is arranged on the boat such that it can be adjusted vertically, horizontally, and lengthwise.

6. Device according to any one of claims 1 to 5, **characterised by** an adjusting device comprising a resetting unit on which the industrial robot (14) on the boat (10) is arranged to be adjustable between a safety position and a working position.

7. Device according to claim 6, **characterised in that** the resetting unit comprises a tensioning unit, by means of which the industrial robot (14) can be moved against pretensioning into the working position and can be released to move automatically into the safety position.

8. Device according to claim 6 or 7, **characterised by** an adjusting control unit by means of which the adjusting device can be controlled.

9. Device according to any one of claims 1 to 8, **characterised by** a protection device for the industrial robot (4, 14, 34) and possibly the transfer element.

10. Device according to any one of claims 1 to 9, **characterised in that** the transfer element is configured as at least one platform (3, 13) and is attached to the free end of the support arm.

11. Device according to any one of claims 1 to 9, **characterised in that** the transfer element is in the form of a landing stage (33).

12. Arrangement comprising a boat (5, 10, 30) and a device according to any one of the preceding claims.

## Revendications

1. Dispositif pour le transfert sûr de personnel ou de matériel d'un objet, qui se présente sous la forme d'un bateau, à un autre objet déplacé par rapport à ce dernier, comprenant une installation de chargement ou de déchargement côté bateau, un élément de transfert et une installation de réglage pour minimiser le déplacement relatif de l'élément de transfert par rapport à l'autre objet,
**caractérisé en ce que** l'installation de chargement ou de déchargement se présente sous la forme d'un robot industriel (4, 14, 34) et son bras de robot sous la forme d'un bras de support, dans lequel l'élément de transfert est monté à l'extrémité libre du bras de support ou conformé pour se raccorder à l'extrémité libre du bras de support.

2. Dispositif selon la revendication 1, **caractérisé en ce que** le bras de support peut être déplacé avec au moins 6 degrés de liberté.

3. Dispositif selon la revendication 1 ou 2, **caractérisé en ce que** le bras de support peut être déplacé au moyen de servomoteurs, dans lequel les servomoteurs peuvent être commandés par l'installation de réglage.

4. Dispositif selon l'une quelconque des revendications 1 à 3, **caractérisé par** une unité de commande de sécurité par laquelle le bras de support peut être déplacé dans une position de sécurité.

5. Dispositif selon l'une quelconque des revendications 1 à 4, **caractérisé par** un dispositif de réglage sur lequel le robot industriel (4, 14, 34) est aménagé de manière à pouvoir être déplacé en hauteur, sur le côté et en longueur sur le bateau.

6. Dispositif selon l'une quelconque des revendications 1 à 5, **caractérisé par** un dispositif de réglage avec une unité de rappel, sur laquelle le robot industriel (14) est agencé de manière à pouvoir se déplacer sur le bateau (10) entre une position de sécurité et une position de travail.

7. Dispositif selon la revendication 6, **caractérisé en ce que** l'unité de rappel présente une unité de tension, par laquelle le robot industriel (14) peut être déplacé en position de travail à l'encontre d'une pré-tension et peut être libéré pour être acheminé automatiquement en position de sécurité.

8. Dispositif selon la revendication 6 ou 7, **caractérisé par** une unité de commande de réglage avec laquelle le dispositif de réglage peut être commandé.

9. Dispositif selon l'une quelconque des revendications 1 à 8, **caractérisé par** un dispositif de protection pour le robot industriel (4, 14, 34) et éventuellement l'élément de transfert.

10. Dispositif selon l'une quelconque des revendications 1 à 9, **caractérisé en ce que** l'élément de transfert se présente sous la forme d'au moins une plateforme (3, 13) et est monté sur l'extrémité libre du bras de support.

11. Dispositif selon l'une quelconque des revendications 1 à 9, **caractérisé en ce que** l'élément de transfert se présente sous la forme d'un pont de débarquement (33).

12. Aménagement avec un bateau (5, 10, 30) et un dispositif selon l'une quelconque des revendications précédentes.
